# EUROPEAN PATENT SPECIFICATION

(11) **EP 2 618 655 B1**
(45) Date of publication and mention of the grant of the patent: **17.08.2016**
(21) Application number: 11778538.6
(22) Date of filing: 20.09.2011
(51) Int. Cl.: A01K 61/00

(54) **FISH COUNTER**
FISCHZÄHLER
COMPTEUR DE POISSONS

(30) Priority: 24.09.2010 NO 20101335
(43) Date of publication of application: 31.07.2013
(73) Proprietor: Wingtech AS, 7255 Sundlandet (NO)
(72) Inventor: WINGAN, Arne, . (NO)
(74) Representative: Haffner, Andreas
(86) International application number: PCT/EP2011/066303
(87) International publication number: WO 2012/038415

(56) References cited:
- EP-A1- 0 217 767
- CA-C- 1 336 276
- JP-A- 11 318 267
- US-A- 4 046 996
- US-A- 5 222 458
- US-A1- 2005 011 470

## Description

### Technical field:

The invention relates to a device for the registration of marine organisms as stated in the introductory part of claim 1, specifically the registration of one or more of the following parameters, or the status: number, weight distribution, shape, type, health condition, as well as other parameters, or the status, which can be measured by the use of said device. In particular, the invention relates to a device for reliable estimation of the number, biomass and/or weight distribution of big quantities of fishes having a broad weight distribution.

### Background art:

There exists prior art devices well suited for the counting of big quantities of fishes based on various optical or mechanical principles. Optical principles means here the use of analogous or digital cameras, infrared sensors, etc. An example of a prior art fish counter using a camera for registration of passing fishes is disclosed in French Patent Application No. FR 2,634,573. This document discloses a method for the counting of fishes by leading the fishes with a steady or approximately steady speed and orientation through a pipe to a registration unit being in the form of an electronic camera. In this way the surface area of each fish is measured, and an estimation of the number of fishes can be made based on an average of the analysis. Another example of the above mentioned fish counter is disclosed in Norwegian Patent No. NO 168,151.

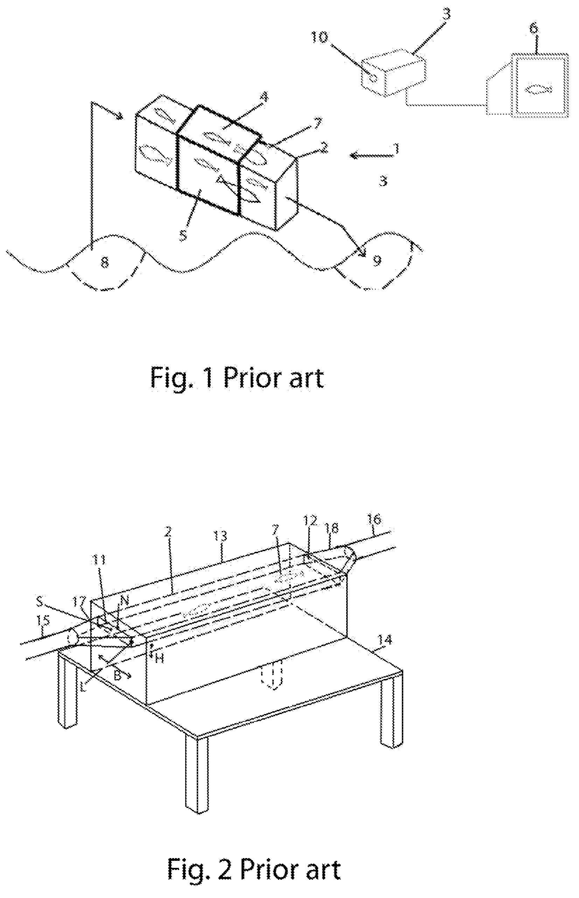

A further development of the above mentioned device may be represented by a high capacity counter which, in addition to registering the fish through a transparent wall in the waterfilled container by the use of a suitable camera, also is able to simultaneously register the fish through another transparent wall in the container. The principle of this further development is demonstrated in figure 1 and is published in a Sintef brochure from the exhibition Aqua Nor 2005. As shown, it is used a registration unit comprising a suitable camera (for example a CCD area camera) and a connected light source, enabling the registration of the shadow area of fishes lead into the transparent container. In addition, at least one mirror is placed in an angle to at least one of the container walls being the longitudinal side of the container, and perpendicular to the light source wall. In this way simultaneous complementing information about the fish is obtained from the two sides of the container, which again will result in a more reliable result for instance in connection with counting the numbers and/or weight distribution in true time. Such additional information is particularly important for a reliable estimation of the number of fishes in situations with a very high density of fishes in the container, since such a high density can lead to a high degree of picture overlapping in the flow direction of the water. The brochure shows a square shaped opening into and out from the registration container. However, also a rectangular opening is known.

By using the last mentioned design the counter will have a high capacity and provide information on the number and weight distribution of fishes being about 5 kg of weight or heavier, within an error rate of only 3 % (2σ). However, the error rate will increase drastically when the sizes of the fishes decrease. For example, when counting fishes of about 2 kg weight the error rate will be substantially higher than the error rate when counting fishes of about 5 kg.

Thus, there is a need in the field for a device for the registration of fishes or other marine organisms, in the following termed a counting device, which can offer a more reliable high capacity counting value even when the weight variation (weight distribution) of the organisms to be registered are substantially higher, for example from 5 grams and more. The possibility of obtaining a reliable registration with such a high weight distribution is desired, for instance when separating fishes to different sea cages or reservoirs based on weight. An example of such sorting to different sea cages is disclosed in the Norwegian Patent No. NO 314,481.

Document JP 11 318267 A discloses a system for the registration of numbers of marine organisms in movement according to the preamble of independent claim 1.

### Object of the invention:

Based on the prior art the object of the present invention is to provide a high capacity counting device intended for use when a large amount of organisms shall be transported or transferred from at least one reservoir (sea cage) to at least another reservoir, this counting device must represent an improvement over the prior art and give counting results having an improved average error rate. This object shall in principle relate to the registration of organisms of all weight classes, such as fishes from about 5 grams of weight and up to tens of kilograms of weight.

### Summary of the invention:

The object of the invention is obtained by a device as stated in the introductory part of claim 1 and having the special features indicated in the characterizing part of the claim. Further preferred embodiments of the invention are stated in dependent claims 2 to 13.

In particular, the present invention comprises a device for the registration of marine organisms in movement, preferably obtaining measured values such as numbers, biomass and/or weight distribution. The device of the invention comprises a registration container which at least partly is manufactured from a transparent or semitransparent material, a transfer duct assembled in fluid communication with the registration container and which is adapted to the transportation of marine organisms from at least one reservoir to the container, as well as a registration unit with at least one camera, the function of the unit is to perform an optical registration of marine organisms which passes through the registration container.

The device is further characterized in that at least one outlet duct is assembled in a fluid communication with the registration container, and at least on injection duct is assembled in fluid communication with the registration container in a position mainly upstream of the least one outlet duct. Prefereably, the at least one outlet duct and the at least one injection duct are mutually configured such that fluid flowing through the transfer duct is directed in the direction of that part of the registration container which gives the optimal optical registration of the marine organisms. By forcing the flow from the transfer duct to a specific area or level in the container by the use of the above mentioned flow regulation, a certain extent of control of passing marine organisms will be obtained, and this will be favorable as to the accuracy in the registered values. The area of the registration container giving the optimal optical registration will often be that part or level situated closest to the camera, or at least one of the cameras, of the registration unit.

To obtain an efficient reduction of the energy used when injecting a fluid into the registration container the device comprises at least one feed back loop in fluid communication with the registration container, wherein the at least one loop comprises a feed back duct and a pumping device, wherein the at least one outlet duct and the at least one injection duct make up the opposite end points of the feed back duct against the registration container, which will result in an optimal optical registration of marine organisms. The term "in fluid communication" means here that the compartments or ducts are mutually assembled in such a manner that fluid can flow from one compartment to a duct or another compartment, optionally from a duct to a compartment or another duct. By connecting the loop(s) as mentioned above, an increased flow speed of the fluid flowing through the registration container will be obtained compared to the flow speed without the use of the loop(s). Such an increased speed can be of great importance to the average error rate in the measured/estimated registration values, such as the number and/or the weight distribution, because a higher speed will reduce the probability that one or more marine organisms being inside the container will move in a direction opposite to the flowing fluid. This is especially important when the cross section of the registration container is substantially greater than the cross section of the transfer duct. To prevent organisms from being drawn into the above mentioned ducts the cross section(s) thereof must be smaller than the smallest organisms which shall be registered, or a preventing means such as a net or a perforated plate must be fixed in the inlet of one or more of the draw off ducts and optionally in one or more of the injection ducts.

The above-mentioned registration unit may comprise at lease one camera of the type CCD area camera, at least one light source, at least one inclined mirror and at least one computer, for example in a configuration such as depicted in the previously mentioned Sintef brochure.

In a preferred embodiment of the present invention the upstream end of the registration container has at least one upstream opening of an asymmetric shape, for example a oval or rectangular shape. The asymmetric shape will result in a scattering of the arrived marine organisms, which will result in a more reliable registration. The longest length from the centre point of the asymmetric shape to the periphery may advantageously be at least 1.5 times the length of the corresponding shortest length to the periphery point. The ratio of last mentioned length to the height is preferably at least 0.25 meter in order to secure that organisms of bigger sized, such as fishes to be slaughtered, can be lead into the container in an efficient and gentle way.

The outlet duct(s) and/or the injection duct(s) are preferably assembled with an orientation parallel to, or essentially parallel to, the main flow direction of the fluid flowing through the registration container. Such an orientation of the end(s) will among others inhibit the development of turbulent flow in the container; this is considered being an advantage because turbulent flow will result in an increase in the error in the measured values.

With one or more outlet flows from the downstream end of the registration container there is a possibility that one or more marine organisms will be stuck; which may result in various degrees of limitation in the mentioned speed increase in the registration container. Such a limitation can be avoided by providing at least two outlet ducts assembled in fluid communication with the registration container, wherein the flow of the fluid in each of the outlet ducts can be controlled by the use of one or more suitable valves. In one embodiment the fluid flowing through the container is fed to a second outlet duct if the current user observes that one or more organisms are stuck in the first outlet duct. Such an obstruction can be observed directly or indirectly. An example of a directly observation of propping is a visual observation of accumulation by the optical registration, while an example of a indirect observation is a measured pressure increase and/or speed reduction in the flow through the registration container. Alternatively, the at least two outlet ducts can alternate in the suction of fluid from the downstream side of the container with a certain frequency. Obviously, it is possible to release such organisms by temporarily stop the pumping means. However, any stop will result in an unwanted change in the fluid flow speed through the registration container. The possibility that marine organisms will be stuck at one or more outflow sections can also be reduced by assembling a perforated plate, which has a non-flat surface between the perforations, in front of the end(s) of the outlet duct(s). In this manner a wanted leakage between the outflow end(s) and the plate can be obtained, which will reduce the outflow strength.

If more than one outlet duct is used, it will be advantageous to assemble the ends of the outlet ducts symmetrical or mainly symmetrical with the periphery of the downstream ends of the registration container. This will ensure a best possible predictable location of the marine organisms at the outlet from the registration container.

Another preferred embodiment is to provide at least one of the registration container walls, which is oriented parallel to the flow direction through the registration container, with at least one projection or ridge such that marine organisms being close to the projection(s) or ridge(s) will become oriented in a preferable direction for optical registration. If the projection(s) has an oblong shape with the longitudinal direction thereof parallel to, or mainly parallel to, the fluid flow direction, such an orientation of the organisms will be further enhanced.

To manipulate the marine organisms to a certain side of the registration container, for instance influenced by the location of the mentioned projection or ridge, the outlet duct(s) and the injection duct(s) may be assembled in a manner to create a net diagonal fluid flow along the registration container.

One or more additional compartments can advantageously be assembled in a fluid communication at one of the registration container walls, preferably at one of the container walls situated perpendicular or mainly perpendicular to the fluid flow direction. In one embodiment the fluid flow from the registration container to at least one additional compartment is controlled by the use of at least one first additional valve. Connecting at least one additional registration unit to the additional compartment, or at least one of the additional compartments, enables a more detailed registration of a selection of marine organisms, e.g. the registration of individual fishes. Such a registration can for example be a more detailed measurement of the size of the fish, occurrence of lice, and similar. A more detailed registration requires that the additional compartment, or at least one of the additional compartments, usually should have a substantially smaller volume than the volume of the registration container. As an example, the volume of the compartment(s) may be 50 % greater than the average volume of one 15 kg fish to be slaughtered. Note that one or more of the additional compartments differ essentially from the registration container in that marine organisms in the additional compartment(s) necessarily are not in movement.

### Brief description of drawings:

Fig. 1 shows an assembled registration unit according to the prior art, wherein an area camera, a light, a mirror and a computer is used to create a picture of the fish from two different angles when the fish passes through a transparent registration container.
Fig. 2 shows an assembled counting device according to the prior art, wherein the transitions from the inlet pipe to the registration container and from the registration container to the outlet pipe are changed from circular to rectangular shape, and from rectangular to circular shape, respectively.
Fig. 3 is a side view of the counting device according to the invention, illustrating the principles for the control of the fluid flow by the use of injection and suction into and out of the transparent registration container, respectively.
Fig. 4 is a schematic view of an assembly according to the present invention, wherein the principle for optical registration of fish is identical to the principles shown in fig. 1.
Fig. 5 is a cross section top view of the registration container according to the present invention, wherein a feedback loop with a pump is assembled in fluid communication with the transparent registration container.
Fig. 6 is an assembled registration container according to the invention, wherein a number of control ridges are indicated in the bottom of the registration container.
Fig. 7 is a cross section top view of the registration container according to the present invention, wherein a feedback loop branched off to more outlet ducts is assembled in fluid communication with the registration container.
Fig. 8 is a schematic side view of an assembly according to the present invention, wherein an additional compartment is assembled in fluid communication with the upstream side of the registration container via a valve, and further in fluid communication with another valve.

### Detailed description of the invention:

Fig. 1 illustrates an assembled prior art registration unit 1 which is able to count the number of fishes and measure the volume and weight distribution in true time with a great accuracy, even at a high capacity. High capacity means here a flow comprising a great amount of fishes or marine organisms passing by at a certain velocity. The registration unit 1 comprises a transparent registration container 2, a video camera 3 such as a CCD area camera, an inclined mirror 4, a suitable illumination source 5, and a computer 6 connected to the video camera 3. Fishes 7 to be registered is fed into a registration container 2 from a first fish cage or reservoir 8, passing through the registration container 2 and is then fed into another fish cage or reservoir 9. When the fish 7 travels between the illumination source 5 and the objective 10 of the video camera, the fish 7 will create a shadow area which is registered by the camera 3 and this information is forwarded to the computer 5 by the use of suitable hardware and software (not shown). The inclined mirror 4 enables collection of complementing information about the fish 7. The software can use this complementing information to estimate such measured values as number and weight distribution with a greater accuracy or improved error rate. Complementing information of this type can be important in high capacity registrations because a high degree of overlapping of the pictures often will make the measurements uncertain.

Even if the accuracy has been substantially improved by the use of registration units 1 as shown in fig. 1, it is still a desire in the art for further improvements in the reliability of the registered measured values. For instance, a great number of small fishes, i.e. fishes that are considerable smaller than the average size of the fishes to be harvested, can lead to a substantial deterioration of the accuracy of the measured values. This problem can be solved by scattering fishes 7 coming into the registration container 2 by increasing the cross section area thereof, preferably by increasing the cross section area of the upstream opening 11 and/or the downstream opening 12. Such an increase in the cross section area can be obtained by for example increasing the breadth (B) of the container 2.

Such an increase in the cross section area into and out of the registration container 2 is illustrated in fig. 2. In this example the container 2 is assembled in a suitable house 13 which again rests on a table or basis 14. Since the transfer duct 15, 16 into and out of, the container 2, respectively, usually has a circular cross section; it is illustrated two adapters 17, 18, i.e. an upstream adapter 17 and a downstream adapter 18, respectively.

They will secure an even and gentle transition from the circular transfer duct 15, 16 to the rectangular container 2, and vice versa. A typical cross section size of the transfer duct used today is about 0.3 meters in diameter. In the art this is considered being a natural lower limit for the diameter because a further reduction in the diameter can increase the risk of obstruction and/or injury of the fish during the registration process. Therefore, 0.3 m may be considered to be a natural lower limit of the height (H) inside the openings 11, 12 of the container.

An increase in the cross section area by increasing the breadth(s) (B) of the opening(s) 11, 12 into the container 2 will give the desired effect, that is to say scattering of incoming fishes 7. Such a scattering will make the registration in the registration unit 1 and the estimation of an accurate number and/or volume and/or weight distribution simpler, and thus a lower error rate in the final measurement values is obtained.

However, an increase in the cross section area will have as a result that the flow velocity of the fluid, being water, flowing into the inlet transfer duct 15 will be reduced when flowing into the container 2. Such a velocity reduction can complicate the registration, among others because of an increased risk that fishes may move against the main stream.

It will therefore be necessary to increase the fluid velocity in the container, preferably to an average velocity which is higher or equal to the fluid velocity in the inlet transfer duct 15.

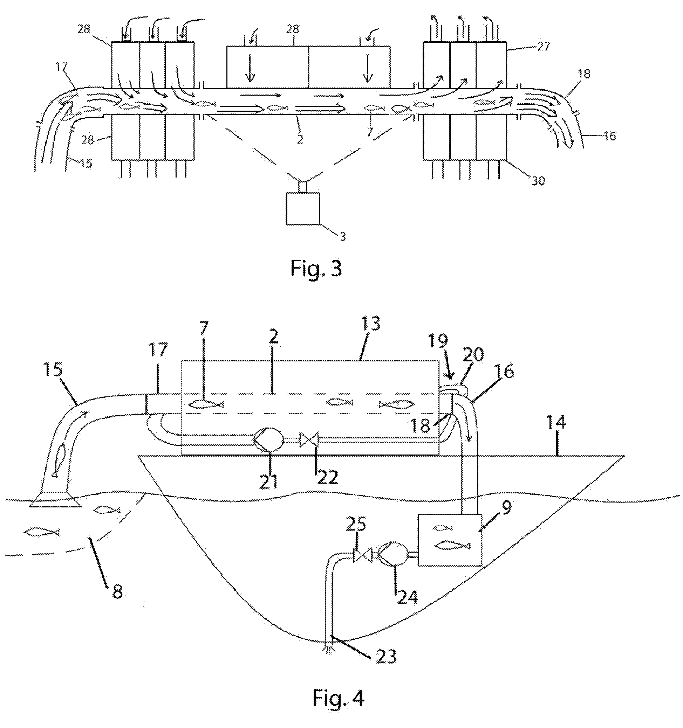

To obtain a higher fluid velocity the invention provides the assembly of one or more separate ducts, 27, 28, feeding fluid into and out of the container 2. Such separate ducts 27, 28, can in addition be used actively to regulate or manipulate incoming fish 7 in a wanted direction, such as illustrated in figure 3. In the figure the double line arrows illustrate the main stream from the fish cage 9 fed through the inlet transfer duct 15, and single line arrows illustrate the flow from the injection duct 28 to the outlet duct 27. In such a configuration the fluid will be forced down against the bottom of the registration container 2, and this pressure will be felt by the incoming fish 7. To improve this downward pressure more injection ducts 28 may be arranged in the centre area of the registration container 2.

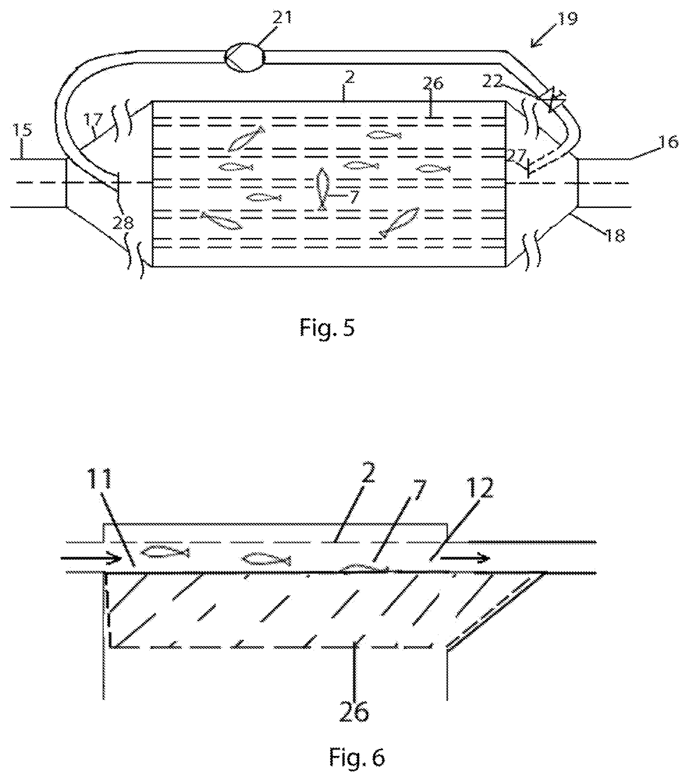

The embodiment with two separate ducts 27, 28 requires a substantial amount of energy because the fluid usually must be pumped up from reservoirs parallel to the main stream, for instance when registering fishes from sea cages. To save energy a separate duct 27, 28 is connected to or integrated with a suitable feedback loop 19 comprising a feedback duct 20, a pumping means 21 and a feedback valve 22, as illustrated in figures 4 and 5. A portion of the main fluid flow in the downstream end of the container is fed to the feedback duct 20 by pumping or suction, preferably by the use of a mechanical pumping means 21, and is then pumped or injected into the upstream end of the container 2. Figure 4 also illustrates a vessel or tank 9 with an outlet duct 23, and the registered fishes 7 are fed into the tank after having passed through the container 2. The pumping effect from the first fish cage 8 to the vessel 9 can be obtained by utilizing the siphon principle, or by a dedicated pump 24. To increase the control of the fluid flow, an outlet valve 25 may advantageously be assembled, optionally together with a suitable frequency regulation of the pump 24. In figure 4 the table or basis 14 is replaced with the deck of a boat or a floating device. Figure 5 shows a more detailed cross section of the registration container 2 seen from above, wherein the feedback loop 19 connected to the container 2 is illustrated. The figure illustrates clearly how the cross section breadth increases from the incoming transfer duct 15, via the upstream adapter 17 and into the container 2. The broken lines illustrates projections or control ridges 26 localized in the bottom of the container 2, preferably close to the downstream opening 12, wherein the longitudinal ridges 26 are parallel to a part of, or the entire, longitudinal wall of the container 2. The purpose of these ridges 26 is to obtain a certain control of the orientation of the fishes 7, which will simplify the registration process. To avoid or limit injuries on the incoming fishes 7 at least one of the ridges 26 is rounded off in one or both ends. The feedback loop 19 can advantageously be used to manipulate the fishes to make them move close to or between the ridges 26. This can be obtained by the above mentioned regulation of the injection and outlet duct(s) 28, 27 by connecting the outlet duct 27 of the feedback loop 19 to the bottom side of the downstream adapter 18, as well as connecting the injection duct 28 of the feedback loop 19 to the top side of the upstream adapter 17, as illustrated in figure 5. Such a configuration will create a net downstream flow along the container 2, and this will be felt by the incoming fishes 7.

Figure 6 is a cross section of the registration container 2 illustrating among others the shape and position of a ridge 26.

By outflow from the downstream side of the registration container 2 as explained above there is a certain risk that fishes 7 will either be sucked into the feedback loop 20 or stuck in the outlet duct 27; both of which can result in a partly or complete propping and consequently result in an unwanted reduction of the flow velocity in the container 2. The first mentioned problem can be solved simply by connecting a grate (not shown), a plate with more perforations (not shown) or another object which can stop the fishes and still maintain a flow of fluid through the feedback loop 20. In the last mentioned case a limitation in the speed can be avoided if the feedback loop 19 comprises more outlet ducts 27 connected to the downstream end of the container 2, wherein the fluid flow in each outlet duct is regulated in a simple and quick way by the use of suitable outlet valves 22,29. The fluid flowing out can in one embodiment be fed to a second outlet duct 30 if the user observes that fishes 7 be stuck in the first outlet duct 27. In another embodiment the outlet valves 22,29 are regulated to obtain that the outflow is directed periodically or almost periodically from one outlet duct 29 to another outlet duct 30. Obviously, it is also possible to release fishes by temporarily stop the pumping means 21. However, it is not preferred to stop the pumping because this will lead to a change in the fluid velocity in the registration container 2, which again will reduce the accuracy of the measured values.

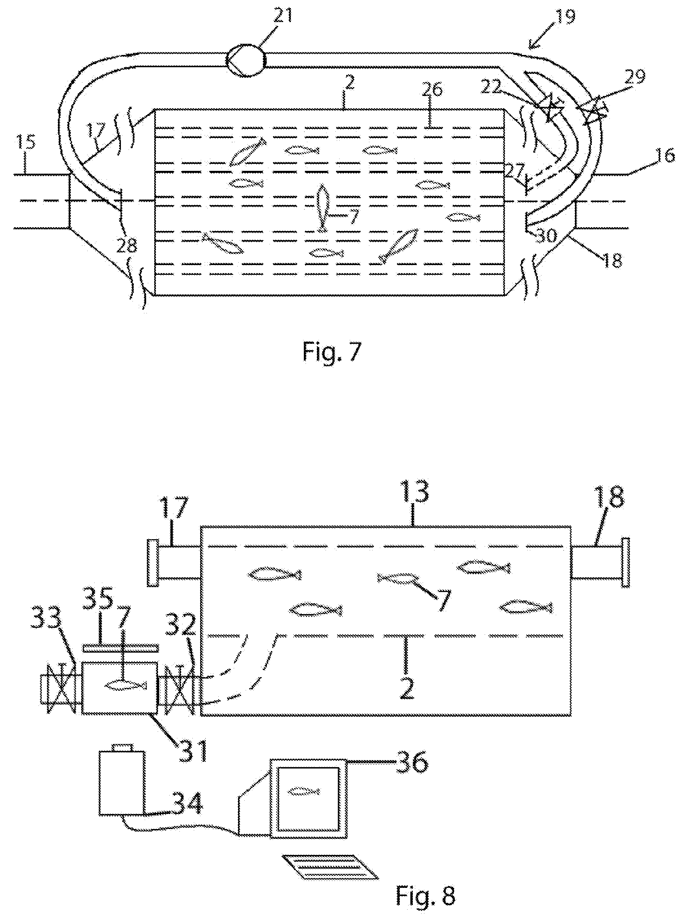

Another embodiment is illustrated in figure 7. In addition to the registration container 2, the house 13 and the two adapters 17,18, it is also illustrated an additional compartment 31 connected in fluid communication with the container 2. The purpose of this additional compartment is to temporarily separate a number of smaller fishes 7 from the container 2 by the use of additional valves 32,33 situated on each side of the additional compartment 31. When a separate additional registration unit 34-36, such as an extra camera 34, a light source 35, a connected computer 36 and suitable hardware and software for collection of data and analysis (not shown), is connected to the additional compartment 31 useable additional information, such as health status, can be obtained.

## Claims

1. System for the registration of numbers and/or weight distribution of marine organisms (7) in movement, comprising
• a registration container (2) manufactured at least partly from a transparent or translucent material,
• a transfer duct (15,16) connected in fluid communication through an upstream adapter (17) to the upstream end of the registration container (2) and adapted for the transfer of marine organisms (7) from at least one reservoir (8) to the registration container (2), and a further portion of the transfer duct is connected in fluid communication through a downstream adapter (18) at the downstream end of the registration container (2) to a receiving reservoir (9),
• a registration unit (1) comprising at least one camera (3), wherein said registration unit (1) is performing an optical registration of marine organisms (7) passing with a fluid flow through the registration container (2), and
• a feedback loop (19) comprising at least one outlet duct (27), a feedback duct (20), at least one injection duct (28) and a pumping means (21) connecting upstream end and downstream end of said registration container (2),
**characterized by**
• said upstream adapter (17) being arranged to scatter the incoming marine organisms (7) by its increasing cross section to improve said registration; and
• said feedback loop (19) being arranged to compensate for flow velocity decrease in the registration container (2) by pumping fluid from the downstream end to the up-stream end of the registration container (2) to at least compensate for flow velocity decrease induced by said cross section increase in the upstream adapter (17).

2. System according to claim 1, wherein the injection duct (28) and the outlet duct (27) are arranged to direct the flow to a part of the registration container (2) and thus leading the marine organisms (7) where optimum conditions for registration are given.

3. System according to claim 1, wherein the registration unit (1) comprises at least two cameras (3) wherein said at least two cameras (3) are arranged with their optical axis perpendicular to each other.

4. System according to claim 3, wherein at least one additional compartment (31) is connected in fluid communication with the registration container (2); a fluid flow from the registration container (2) to said at least one additional compartment (31) can be regulated by the use of at least one first additional valve (32); and at least one additional registration unit (34-36) for optical registration of marine organisms (7) is connected to at least one of said at least one additional compartments (31).

5. System according to claim 4,
wherein the volume of said at least one additional compartments (31) is substantially smaller than the volume of the registration container (2).

6. System according to claim 1,
wherein the upstream end of the registration container (2) has at least one upstream opening (11) of asymmetric shape.

7. System according to claim 6,
wherein the length from a center point (S) of the asymmetric shape to the periphery point (L) farthest off said center point is at least 1.5 times the length from the center point (S) of the asymmetric shape to the periphery point (N) closest to the center point.

8. System according to claim 7,
wherein the length from the center point (S) of the asymmetric shape to the periphery point (N) closest to the center point is at least 0.25 meter.

9. System according to claim 1,
wherein at least one of the at least one outlet ducts (27) and the at least one injection duct (28) is connected parallel to, or almost parallel to, the main stream of the fluid flowing through the registration container (2).

10. System according to claim 1,
wherein the device comprises at least two outlet ducts (27,30) connected in fluid communication with the registration container (2), and the fluid flow in each of the at least two outlet ducts (27,30) can be regulated by the use of outlet valves (22,29).

11. System according to claim 10,
wherein said at least two outlet ducts (27, 30) are connected symmetrically or almost symmetrically to the periphery of the downstream end of registration container (2).

12. System according to any of the preceding claims,
wherein at least one of the walls in the registration container (2) is positioned parallel to the flow direction of the fluid flowing there through, and is provided with at least one projection (26).

13. System according to claim 12,
wherein the at least one projection (26) is of an oblong shape, and the longitudinal length of said one projection(s) is oriented substantially parallel to the fluid flow direction.

## Patentansprüche

1. System für die Erfassung der Anzahl und/oder Gewichtsverteilung von marinen Lebewesen (7) in Bewegung, welches beinhaltet
• ein Erfassungsbehälter (2) hergestellt zumindest teilweise aus einem durchsichtigen oder durchscheinende Material,
• ein Überführungskanal (15,16) verbundenen mit Strömungsverbindung durch einen Stromaufwärtsadapter (17) zum Stromaufwärtsende des Erfassungsbehälters (2) und eingerichtet zur Überführung von marinen Lebewesen (7) aus mindestens einem Reservoir (8) zum Erfassungsbehälter (2), und ein weiterer Teil des Überführungskanals ist verbunden mit Strömungsverbindung durch einen Stromabwärtsadapter (18) am Stromabwärtsende des Erfassungsbehälters (2) in ein Aufnahmereservoir (9),
• eine Erfassungseinheit (1) umfassend mindestens eine Kamera (3), wobei die genannte Erfassungseinheit (1) eine optische Erfassung der marinen Lebewesen (7) ausführt welche mit einer Fluidströmung den Erfassungsbehälter (2) passieren, und
• eine Rückkopplungsschleife (19) welche mindestens eine Ablaufleitung (27), einen Rückkopplungskanal (20), mindestens eine Einspritzleitung (28) und ein Pumpmittel (21) beinhaltet, welche Stromaufwärtsende und Stromabwärtsende des Erfassungsbehälters (2) verbindet,
**dadurch gekennzeichnet, dass**
• der genannte Stromaufwärtsadapter (17) dazu eingerichtet ist, die ankommenden marinen Lebewesen (7) nach ihrem zunehmende Querschnitt zu verteilen, um die Erfassung zu verbessern; und
• die Rückkopplungsschleife (19) dazu eingerichtet ist, die Strömungsgeschwindigkeitsabnahme im Erfassungsbehälter (2) durch Pumpen von Fluid vom Stromabwärtsende zum Stromaufwärtsende des Erfassungsbehälters (2) zu kompensieren, um zumindest die Strömungsgeschwindigkeitsabnahme verursacht durch die Querschnittserweiterung im Stromaufwärtsadapter (17) zu kompensieren.

2. System gemäß Anspruch 1,
**dadurch gekennzeichnet, dass** die Einspritzleitung (28) und die Ablaufleitung (27) dazu eingerichtet sind, die Strömung zu einem Teil des Erfassungsbehälters (2) zu leiten und auf diese Weise die marinen Lebewesen (7) wo optimale Bedingungen zur Erfassung gegebenen sind.

3. System gemäß Anspruch 1,
**dadurch gekennzeichnet, dass** die Erfassungseinheit (1) mindestens zwei Kameras (3) beinhaltet wobei die mindestens zwei Kameras (3) mit ihren optischen Achsen senkrecht zueinander angeordnet sind.

4. System gemäß Anspruch 3,
**dadurch gekennzeichnet, dass**
• mindestens ein weiteres Abteil (31) mit dem Erfassungsbehälter (2) mit Strömungsverbindung verbundenen ist;
• eine Fluidströmung vom Erfassungsbehälter (2) zum genannten mindestens einem zusätzlichen Abteil (31) durch die Benutzung von mindestens einem ersten zusätzlichen Ventil (32) geregelt werden kann; und
• mindestens eine weitere Erfassungseinheit (34-36) zur optischen Erfassung der marinen Lebewesen (7) mit mindestens einem der mindestens einem zusätzlichen Abteile (31) verbundenen ist.

5. System gemäß Anspruch 4,
**dadurch gekennzeichnet, dass** das Volumen des mindestens einen zusätzlichen Abteils (31) wesentlich kleiner ist als das Volumen des Erfassungsbehälters (2).

6. System gemäß Anspruch 1,
**dadurch gekennzeichnet, dass** das Stromaufwärtsende des Erfassungsbehälters (2) mindestens eine Stromaufwärtsöffnung (11) mit asymmetrischer Form hat.

7. System gemäß Anspruch 6,
**dadurch gekennzeichnet, dass** die Länge von einem zentralen Punkt (S) der asymmetrischen Form zum Peripheriepunkt (L) am weitesten weg von dem genannten zentralen Punkt, ist mindestens 1.5 mal die Länge vom zentralen Punkt (S) der asymmetrischen Form zum Peripheriepunkt (N) nächst dem zentralen Punkt.

8. System gemäß Anspruch 7,
**dadurch gekennzeichnet, dass** die Länge vom zentralen Punkt (S) der asymmetrischen Form zum Peripheriepunkt (N) nächst dem zentralen Punkt ist mindestens 0.25 Meter.

9. System gemäß Anspruch 1,
**dadurch gekennzeichnet, dass** mindestens eine der mindestens einen Ablaufleitung (27) und der mindestens einen Einspritzleitung (28) parallel zum, oder fast parallel zum Hauptfluss des Fluides welches durch den Erfassungsbehälter (2) fließt verbundenen ist.

10. System gemäß Anspruch 1,
**dadurch gekennzeichnet, dass** die Vorrichtung mindestens zwei Ablaufleitungen (27,30) umfasst, verbunden mit Strömungsverbindung mit dem Erfassungsbehälter (2), und die Fluidströmung in jedem der mindestens zwei Ablaufleitungen (27,30) durch die Benutzung von Ablaufventilen (22,29) geregelt werden kann.

11. System gemäß Anspruch 10,
**dadurch gekennzeichnet, dass** die mindestens zwei Ablaufleitungen (27, 30) symmetrisch oder fast symmetrisch mit der Peripherie des Stromabwärtsende des Erfassungsbehälters (2) verbunden sind.

12. System gemäß eines beliebigen der vorangehenden Ansprüche,
**dadurch gekennzeichnet, dass** mindestens eine der Wände im Erfassungsbehälter (2) parallel zur Strömungsrichtung des dort hindurch strömenden Fluides platziert ist, und ausgestattet ist mit mindestens einer Projektion (26).

13. System gemäß Anspruch 12,
**dadurch gekennzeichnet, dass** die mindestens eine Projektion (26) eine längliche Form hat, und die Längsausdehnung der einen Projektion(en) hauptsächlich parallel zur Fluidströmungsrichtung orientiert ist.

## Revendications

1. Système pour l'enregistrement des numéros et/ou la répartition du poids des organismes marins (7) en mouvement, comprenant
• un réservoir d'enregistrement (2) fabriqué au moins en partie d'un matériau transparent ou translucide,
• un conduit de transfert (15,16) relié en communication fluidique par un adaptateur en amont (17) à l'extrémité amont du réservoir d'enregistrement (2) et adapté pour le transfert d'organismes marins (7) d'au moins un réservoir (8) vers le réservoir d'enregistrement (2), et un autre partie du conduit de transfert est relié en communication fluidique par un adaptateur en aval (18) à l'extrémité aval du réservoir d'enregistrement (2) á un réservoir réception (9),
• une unité d'enregistrement (1) comprenant au moins une caméra (3), dans lequel ladite unité d'enregistrement (1) est exécuté un enregistrement optique d'organismes marins (7) passant par un écoulement de fluide à travers le réservoir d'enregistrement (2), et
• un boucle de rétroaction (19) comprenant au moins un conduit de sortie (27), un conduit de de rétroaction, au moins un conduit d'injection (28) et un moyen de pompage (21) reliant extrémité amont et extrémité aval dudit réservoir d'enregistrement (2),
**caractérisé par**
• ledit adaptateur amont (17) étant agencés pour disperser les organismes marins entrants (7) par sa coupe transversale croissante d'améliorer ledit enregistrement; et
• ledit boucle de rétroaction(19) étant agencé pour compenser la diminution de la vitesse d'écoulement dans le réservoir d'enregistrement (2) par pompage de fluide à partir de l'extrémité aval vers l'extrémité amont du réservoir d'enregistrement (2) à au moins compenser la diminution de la vitesse d'écoulement induite par ladite augmentation de coupe transversale du adaptateur en amont (17).

2. Système selon la revendication 1,
dans lequel le conduit d'injection (28) et le conduit de sortie (27) sont agencés pour diriger l'écoulement à une partie du réservoir d'enregistrement (2) et conduisant ainsi les organismes marins (7) où les conditions optimales pour l'enregistrement sont données.

3. Système selon la revendication 1,
dans lequel la unité d'enregistrement (1) comprenant au moins deux caméras (3) dans lequel lesdits au moins deux caméras (3) sont agencés avec leur axe optique perpendiculaire à l'une l'autre.

4. Système selon la revendication 3,
dans lequel au moins un compartiment supplémentaire (31) est relié en communication fluidique avec le réservoir d'enregistrement (2); un écoulement de fluide à partir du réservoir d'enregistrement (2) auxdits au moins un compartiment supplémentaire (31) peut être réglé par l'utilisation d'au moins une première soupape supplémentaire (32); et au moins une unité d'enregistrement supplémentaire (34-36) pour l'enregistrement optique d'organismes marins (7) est relié à au moins un de dit au moins un des compartiments supplémentaires (31).

5. Système selon la revendication 4,
dans lequel the volume dudit au moins un des compartiments supplémentaires (31) est considérablement plus petite que le volume du réservoir d'enregistrement (2).

6. Système selon la revendication 1,
dans lequel l'extrémité amont du réservoir d'enregistrement (2) a au moins une ouverture amont (11) de forme asymétrique.

7. Système selon la revendication 6,
dans lequel la longueur à partir d'un point central (S) de la forme asymétrique vers le point de périphérie (L) le plus éloigné dudit point central est au moins 1.5 fois la longueur à partir du point central (S) de la forme asymétrique vers le point de périphérie (N) le plus proche du point central.

8. Système selon la revendication 7,
dans lequel la longueur à partir du point central (S) de la forme asymétrique vers le point de périphérie (N) le plus proche du point central est au moins 0.25 mètre.

9. Système selon la revendication 1,
dans lequel au moins un des au moins un conduit de sortie (27) et le au moins un conduit d'injection (28) est relié en parallèle, ou presque en parallèle à, le courant principal du écoulement de fluide s'écoulant à travers le réservoir d'enregistrement (2).

10. Système selon la revendication 1,
dans lequel le dispositif comprenant au moins deux conduits de sortie (27,30) relié en communication fluidique avec le réservoir d'enregistrement (2), et l'écoulement de fluide dans chacun des au moins deux conduits de sortie (27,30) peut être réglé par l'utilisation de soupapes de sortie (22,29).

11. Système selon la revendication 10,
dans lequel ledit au moins deux conduits de sortie (27, 30) sont relié symétriquement ou presque symétriquement á la périphérie de l'extrémité aval du réservoir d'enregistrement (2).

12. Système selon l'une quelconque des revendications précédentes,
dans lequel au moins l'un des murs du réservoir d'enregistrement (2) est positionné parallèle á la direction d'écoulement du écoulement de fluide s'écoulant à travers celui, et est pourvu avec au moins une saillie (26).

13. Système selon la revendication 12,
dans lequel la au moins une saillie (26) est d'une forme oblongue, et la longueur longitudinal de ladite une saillie (s) est orienté substantiellement parallèlement de la direction d' écoulement de fluide.
